**Europäisches Patentamt**

**European Patent Office**

**Office européen des brevets**

(19)

(11) Publication number : **0 366 637 B1**

(12)

# EUROPEAN PATENT SPECIFICATION

(45) Date of publication of patent specification :
14.10.92 Bulletin 92/42

(51) Int. Cl.⁵ : **F24F 13/00,** F16B 5/06,
F16L 49/00

(21) Application number : **89850361.0**

(22) Date of filing : **23.10.89**

(54) **A joint for air-conditioning units.**

(30) Priority : **24.10.88 FI 884906**

(43) Date of publication of application :
**02.05.90 Bulletin 90/18**

(45) Publication of the grant of the patent :
**14.10.92 Bulletin 92/42**

(84) Designated Contracting States :
**AT BE CH DE ES FR GB GR IT LI LU NL SE**

(56) References cited :
EP-A- 0 011 919
EP-A- 0 191 273
CH-A- 654 648
DE-A- 2 553 551
US-A- 3 510 140

(73) Proprietor : **PAAVO RANNILA OY**
**Linjatie 5**
**SF-01260 Vantaa (FI)**

(72) Inventor : **Kanninen, Seppo**
**Elsankuja 2 H 70**
**SF-02230 Espo (FI)**

(74) Representative : **Svanfeldt, Hans-Ake et al**
**DR. LUDWIG BRANN PATENTBYRA AB Box**
**1344 Drottninggatan 7**
**S-751 43 Uppsala (SE)**

## Description

The present invention relates to a joint for air-conditioning units, comprising a soft seal between the end edges, the seal sealing the air-conditioning units to one another when they are tightened together, there being for the seals separate depressions in which the seals can be installed before the air-conditioning units are tightened together.

The best known joints for joining air-conditioning units are simple flange-bolt joints. At present there are also used various strip joint systems in which the joints are sealed by using C-shaped strips. For example, DK-A-149 498 and EP-A-0191273 disclose certain joint systems known per se. However, these systems do not in any way pertain to the linking of air-conditioning units to one another but primarily represent the state of the art.

The object of the invention is to provide a new type of joint, which is easy to fasten and which seals with a small tightening force. This object is achieved with a joint as defined in claims 1 and 2. An essential feature of joint according to the invention is that in the center of the seal there is a slit-like depression for the edge sheet or a separate sealing sheet, which the sheet engages when tightened into place. When the invention is used, great tightening forces are not required, since, owing to the structure of the seal, the air-conditioning units are sealed to one another very easily, whereafter the actual fastening of the air-conditioning units to one another is carried out by methods known per se. Owing to the invention, air-conditioning units can be linked to one another quite close to a wall, ceiling or floor, which has been inconvenient by using previously known jointing systems.

In a first embodiment of the invention the depressions for the seals are made up of a separate, H-shaped edge strip installed between the end edges, the seals being installed in it and the end edges being capable of being pressed into the seal. It is thus not necessary to have any sealing system in the actual air-conditioning units, the sealing is made up of a separate, H-shaped strip provided with seals, the strip being easy to install between air-conditioning units when they are being linked to one another.

In a second embodiment of the invention the depressions for the seals are located at the edges of the air-conditioning units and that it is possible to install between the seals a separate sealing sheet which tightens against the seals. By a system such as this, one single neat seam is produced between the air-conditioning units. The seals and the sealing sheet between them may also constitute a separate sealing unit so that the seals are, for example, attached to each other at one edge.

In a preferred embodiment of the invention the edges of the depression are toothed. The seal, which is usually rubber, thus grips better the sheet entering the depression.

The invention is described below with the aid of an example, with reference to the accompanying drawing, wherein

Figure 1 depicts three air-conditioning units linked to one another.

Figure 2 depicts a cross section through II-II of Figure 1.

Figure 3 depicts a cross section through III-III of Figure 1.

Figure 4 depicts a joint according to one embodiment.

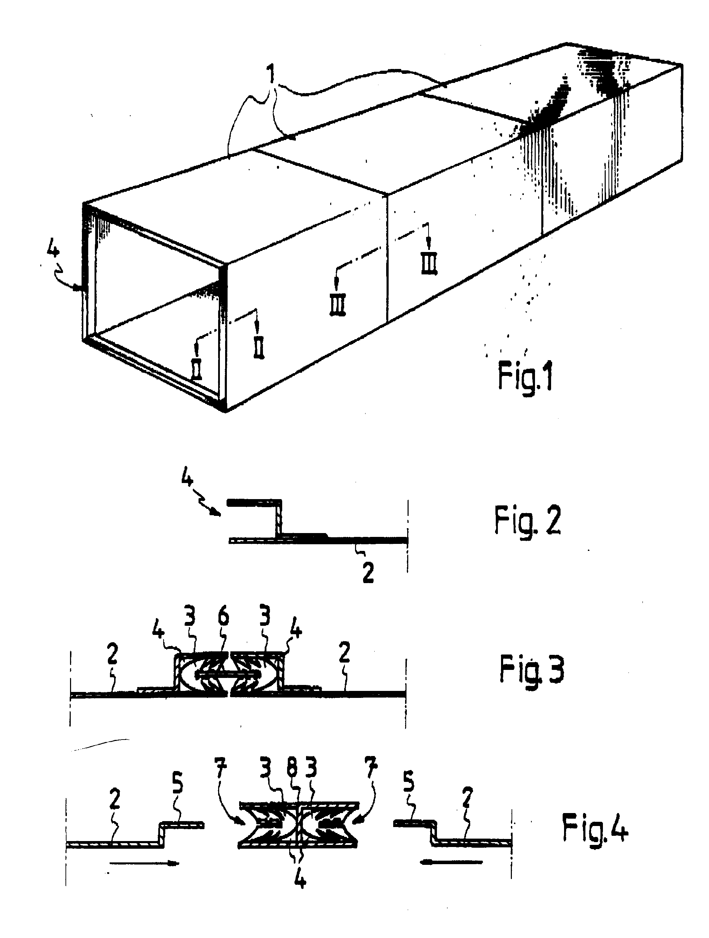

The joint between the air-conditioning units 1 comprises a soft seal 3 between the end edges 2, the seal sealing the air-conditioning units to one another when they are tightened together. For the seal 3 there are separate depressions 4, in which the seals 3 can be installed before the air-conditioners are tightened against each other. In the middle of the seal 3 there is a slit-like depression 7 for the tightening sheet 6, the sheet 5, 6 engaging it when tightened in place. The edges of the depression are toothed, as can be seen in Figures 3 and 4. In Figure 4 the depressions 4 for the seals 3 are made up of a separate, H-shaped edge strip 8 installable between the end edges 2, the seals 3 being installed in the edge strip and the end edges 5 being capable of being pressed into the seals. In Figures 1-3 the depressions 4 for the seals 3 are located on the edges of the air-conditioning units. A separate sealing sheet 6 can be installed between the seals 3, the sheet tightening against the seals 3. The linking of the air-conditioning units to one another by using the system according to the invention is easy, with a small linking force. The linking of air-conditioning units can be carried out, for example, quite close to a wall.

## Claims

1. A joint for sealing two air conditioning units (1) to each other, the joint comprising two soft seals (3) each being installed within a depression (4), characterized in that

   for the installation of the joint between the end edges (5) of the two units, the depressions (4) are formed as parts of an H-shaped strip (8), said soft seals (3) being installed within the H of said strip, and in that

   there is a slit-like depression (7) in the centre of the seals (3) for pressing the end edges (5) of said air-conditioning units (1) thereinto.

2. A joint for sealing two air conditioning units (1) to each other, the joint comprising two soft seals (3) each being installed within a depression (4), characterized in that

   for the installation of the joint between the end edges (5) of the two units, the depressions (4) are formed as integral parts of each unit (1) at the end edges (5) thereof and are essentially C-shaped, each soft seal (3) being installed within said C, and in that

there is a slit-like depression (7) in the centre of the seals (3) into which a sealing sheet (6) is pressed for connecting the units with each other.

3. The joint as claimed in claim 1 or 2, wherein the edges of the slit-like depression are toothed.

**Patentansprüche**

1. Verbindung zum Abdichten zweier Klimatisierungseinheiten (1) in Bezug aufeinander, mit zwei weichen Dichtungen (3), die jeweils in einer Vertiefung (4) untergebracht sind, **dadurch gekennzeichnet**, daß die Vertiefungen (4) zur Installation der Verbindung zwischen den Stirnrändern (5) der beiden Einheiten als Teile eines H-förmigen Streifens (8) ausgebildet sind, daß die weichen Dichtungen (3) innerhalb des H des Streifens angeordnet sind und daß sich in der Mitte der Dichtungen (3) eine schlitzförmige Vertiefung (7) zum Eindrücken der Stirnränder (5) der Klimatisierungseinheiten (1) befinden.

2. Verbindung zum Abdichten zweier Klimatisierungseinheiten (1) miteinander, welche zwei weiche Dichtungen (3) enthält, die jeweils in einer Vertiefung (4) untergebraacht sind, **dadurch gekennzeichnet,** daß die Vertiefungen (4) zur Herstellung der Verbindung zwischen den Stirnrändern (5) der beiden Einheiten als integrale Teile jeder Einheit (1) an deren Stirnrändern (5) gebildet und im wesentlichen C-förmig sind, daß die weichen Dichtungen (3) jeweils in dem besagten C untergebracht sind und daß sich in der Mitte der Dichtungen (3) eine schlitzförmige Vertiefung (7) befindet, in die ein Abdichtstreifen (6) zum Verbinden der beiden Einheiten miteinander gedrückt wird.

3. Verbindung nach Anspruch 1 oder 2, **dadurch gekennzeichnet**, daß die Ränder der schlitzförmigen Vertiefung gezahnt sind.

**Revendications**

1. Joint pour étanchéifier deux unités de conditionnement d'air (1) l'une par rapport à l'autre, ce joint comprenant deux éléments d'étanchéité mous (3) installés chacun dans un renfoncement (4), caractérisé en ce que pour l'installation du joint entre les bords d'extrémité (5) des deux unités, les renfoncements (4) sont formés en tant que parties d'une bande en forme de H (8), lesdits éléments d'étanchéité mous (3) étant installés dans le H de ladite bande, et en ce qu'il existe, au centre des éléments d'étanchéité (3), un renfoncement en forme de fente (7) permettant d'y repousser les bords d'extrémité (5) desdites unités de conditionnement d'air (1).

2. Joint pour étanchéifier deux unités de conditionnement d'air (1) l'une par rapport à l'autre, ce joint comprenant deux éléments d'étanchéité mous (3) installés chacun dans un renfoncement (4), caractérisé en ce que pour l'installation du joint entre les bords d'extrémité (5) des deux unités, les renfoncements (4) sont formés en tant que parties intégrantes de chaque unité (1) au niveau des bords d'extrémité (5) de ces unités et sont sensiblement en forme de C, chaque élément d'étanchéité (3) étant installé à l'intérieur dudit C, et en ce qu'il existe, au centre des éléments d'étanchéité (3), un renfoncement en forme de fente (7) dans lequel une feuille d'étanchéité (6) est repoussée pour le raccordement des unités l'une à l'autre.

3. Joint selon la revendication 1 ou 2, dans lequel les bords du renfoncement en forme de fente sont dentelés.

Fig.1

Fig. 2

Fig. 3

Fig.4